# EUROPÄISCHE PATENTSCHRIFT

(11) **EP 1 539 619 B1**
(45) Veröffentlichungstag und Bekanntmachung des Hinweises auf die Patenterteilung: **28.06.2006**
(21) Anmeldenummer: 03794681.1
(22) Anmeldetag: 09.09.2003
(51) Int. Cl.: B65G 39/00

(54) **VERFAHREN ZUM BE- UND ENTLADEN**
METHOD FOR LOADING AND UNLOADING
PROCEDE POUR CHARGER ET DECHARGER

(30) Priorität: 11.09.2002 AT 13592002
(43) Veröffentlichungstag der Anmeldung: 15.06.2005
(73) Patentinhaber: RAIL CARGO AUSTRIA AG, 1010 Wien (AT)
(72) Erfinder: SCHRATT, Dietmar, A-1190 Österreich (AT); SCHIMANY, Helmut, Klaus, A-1070 Wien (AT)
(74) Vertreter: Widtmann, Georg
(86) Internationale Anmeldenummer: PCT/AT2003/000263
(87) Internationale Veröffentlichungsnummer: WO 2004/024605

(56) Entgegenhaltungen:
- WO-A-01/46061
- WO-A-98/35891
- DE-A- 10 033 141
- DE-A- 19 521 020
- US-A- 3 836 020

## Beschreibung

Die Erfindung bezieht sich auf ein Verfahren zum Be- und Entladen von Langstreckentransportmittel sowie Zwischenlagern in einem Zwischenlager von standardisiertem Ladegut, z. B. Container, Wechselaufbauten für Lastkraftwagen.

Der Transport von Gütern erfolgt zusehends in standardisierten Behältern, wie Container, Tankcontainer, da dann sowohl die Lagerung als auch der Transport der Güter unter optimaler Platzausnützung durchgeführt werden kann. Auch das Be- und Entladen kann mit standardisiertem Hebezeugen erfolgen, so dass eine Mechanisierung des Be- und Entladens besonders leicht ermöglicht ist (siehe z.B. das Dokument US-A-3836020).

Langstreckentransportmittel, wie beispielsweise Eisenbahngüterwagen, Lastkraftwagen, Schiffe, sind hochwertige Investitionsgüter und sollen daher möglichst geringe Stillstandszeiten aufweisen. Zusätzlich ist man bestrebt, die Gesamttransportzeiten von Gütern so gering wie möglich zu halten, wobei das Be- und Entladen, insbesondere von schienengebundenen Fahrzeugen, da derartige Züge einige hundert Meter lang sind, außerordentlich zeitaufwendig sein kann. Einerseits werden derartige Züge auf Ranchierbahnhöfen in aufwendiger Arbeit zusammengestellt, andererseits kann bei einheitlichem rollenden Material das Zusammenstellen eines Zuges an sich durch entsprechendes Beladen des Zuges einfach ersetzt werden. Voraussetzung hierfür ist allerdings, dass eine entsprechende Logistik, u. zw. beim Entladen, Zwischenlagern und Beladen eines Zuges und auch anderer Langstreckentransportmittel zur Verfügung steht.

Aus der WO 99/10258 wird ein Lager bekannt, bei dem Lagergut beliebiger Abmessung auf Ladungsträger angeordnet werden.

Der beladene Ladungsträger gelangt in ein Lagergerüst, das Vertikal- und Horizontalfördereinrichtungen aufweist, zur Lagerung. Die Verwaltung des Lagers erfolgt dabei mit einer Datenverarbeitungseinrichtung. Es ist weiters vorgesehen, dass an Arbeitsplätzen kleinere Ladeeinheiten zusammengestellt werden können, die dann in ihrer Größe einer großen Ladeeinheit entsprechen. Durch die Vielzahl der vertikal ausgerichteten Transportschächte und vertikalen Fördereinrichtungen als auch in horizontaler Richtung sind aufwendige Konstruktionen gegeben, die, ob ihrer Vielfalt, besonders störungsanfällig sind.

In der EP 0 599 841 B1 sind ein Verfahren und eine Vorrichtung zum Umschlagen von Containern beschrieben. Die Container, welche mit Lastkraftwagen zur Ladestation gebracht werden, werden von einem Hebezeug vom LKW abgezogen und gelangen auf schienengeleitete rollende Paletten. Gemeinsam mit den rollenden Paletten wird das Lagergut in einem Lager aufbewahrt. Zur Beladung eines Eisenbahnzuges wird nun so vorgegangen, dass das Ladegut bereits bevor der zu beladende Zug einfährt, neben dem Gleis in gewünschter Reihenfolge aufgestellt wird, so dass die Beladungszeit des Zuges wesentlich kürzer gehalten werden kann, da ein Vorpositionieren der zu transportierenden Güter bereits erfolgt ist und lediglich das Aufsetzen der Container auf das rollende Material erfolgen muss. Eine Lagerverwaltung erfolgt mit einer Datenverarbeitungsanlage. Anstelle der Rollpaletten werden auch Förderbänder vorgeschlagen. Es liegt hier eine konstruktiv aufwendige und daher störungsanfällige Vorrichtung vor.

Der Erfindung ist zur Aufgabe gesetzt, ein Verfahren zum Be- und Entladen von Langstreckentransportmitteln sowie Zwischenlagern zu schaffen, das kürzere Zeiten zum Be- und Entladen der Langstreckentransportmittel und der Beschickung und Entnahme eines Zwischenlagers erlaubt, welches weiters keine zusätzlichen Mittel als zum Heben benötigt, um Container, Wechselaufbauten be- und entzuladen bzw. zwischenzulagern, sondern lediglich etwa horizontal und vertikal bewegbares Hebezeug benötigt. Weiters soll das Verfahren ermöglichen, dass für die Durchführungs nur ein geringer Platzbedarf erforderlich ist.

Das erfindungsgemäße Verfahren zum Be- und Entladen von Langstreckentransportmitteln sowie Zwischenlagern in einem Zwischenlager von standardisiertem Ladegut, z. B. Container, Wechselaufbauten für Straßenlastkraftwagen, wobei das Ladegut, insbesondere automatengestützt, identifiziert, mit einem schienengeleiteten Hebezeug mit Greifer von einem Langstreckentransportmittel angehoben und zu einem Übergabebereich verbracht, abgesenkt und abgestellt wird, wonach das Lagegut automatengestützt schienengeleitet zu einem zumindest ein-, insbesondere mehrstöckigen, Zwischenlager verbracht und dort automatengestützt eingelagert, sodann automatengestützt entnommen, schienengeleitet zu einem prädestinierten Ort des Übergabebereich automatengestützt verbracht und mit dem schienengeleiteten Hebezeug auf ein schienengeleitetes Langstreckentransportmittel abgesenkt und abgestellt wird, besteht im Wesentlichen darin, dass das Ladegut im Übergabebereich von einem weiteren schienengeleiteten Hebezeug mit, insbesondere gleichen, Greifern wie des Hebezeuges, z. B. Spreadern, Kombispreadern, Zangen, angehoben und von diesem, gegebenenfalls etwa horzizontal, zum prädestinierten Ort in das Zwischenlager, gegebenenfalls unter Vertikalförderung, über einen verschieb- und/oder teleskopierbaren Arm des weiteren Hebezeuges in das Zwischenlager automatengestützt bewegt und dort abgesenkt und abgestellt wird, worauf zum Beladen des schienengebundenen Langstreckenfahrzeuges das weitere Hebezeug automatengestützt zu einem prädestinierten Ort des Zwischenlagers verfahren wird und über den verschieb- und/oder teleskopierbaren Arm das Ladegut angehoben und dem Zwischenlager automatengestützt entnommen und automatengestützt zu einem prädestinierten Ort des Übergabebereiches verfahren wird und das Ladegut in diesem abgesenkt und abgestellt wird, worauf das Ladegut vom Hebezeug angehoben über den Langstreckentransportmittel verfahren, und dort abgesenkt und abgestellt wird.

Standardisiertes Ladegut bietet gegenüber Ladegut mit unterschiedlichen Abmessungen den Vorteil, dass sowohl auf Langstreckentransportmittel als auch in einem Zwischenlager genau angepaßte Räume zur Verfügung stehen können. Dadurch tritt eine wesentliche Verringerung eines Platzbedarfes ein. Weiters besteht der Vorteil, dass ebenfalls mit standardisierten Hebezeugen gearbeitet werden kann. Um einen raschen Ablauf des Be- und Entladens sowie Zwischenlagerns zu erreichen, ist es erforderlich, dass das Ladegut bereits beim Eintreffen am Güterbahnhof identifiziert wird. Diese Identifizierung, welche beispielsweise über Strichcodes, Chips, Videokamera erfolgen kann, dem die wichtigsten Daten wie Abgangsort, Zielort, Absender, Empfänger, Abfahrtszeitpunkt, Ankunftszeitpunkt zu entnehmen sind, kann automatengestützt, insbesondere mit einer Datenverarbeitungsanlage aufgenommen werden. Durch das Verbringen des Ladegutes mit einem schienengeleiteten Hebezeug zu einem Übergabebereich wird der Vorgang des Abladens eines Langstreckentransportmittels und des Verbringens in ein Zwischenlager getrennt, so dass beispielsweise durch die Anzahl der Hebezeuge und weiteren Hebezeuge dem unterschiedlichen Zeitbedarf für ihre einzelnen Handlungen Rechnung getragen wird. Durch das Verbringen in ein zumindest ein-, insbesondere mehrstöckiges, Zwischenlager kann einerseits vermieden werden, dass Container übereinander gelagert werden, so dass jeder Container für sich ohne Umstapeln derselben entnommen werden kann und andererseits eine ortsgenaue Lagerung und damit auch eine einwandfreie Identifizierung zur Entnahme ermöglicht ist. Unter einem einstöckigen Zwischenlager ist ein Zwischenlager zur ebenen Erde zu verstehen. Durch die automatengestützte Einlagerung wird der Abstellplatz vorgemerkt, und es kann sodann das Ladegut erneut automatengestützt entnommen werden. Wird das Ladegut im Übergangsbereich von einem weiteren schienengeleiteten Hebezeug angehoben und von diesem zum prädestinierten Ort vor dem Zwischenlager bewegt und sodann über einen verschieb- und/oder teleskopierbaren Arm in das Zwischenlager bewegt und dort abgesenkt, so ist keine zusätzliche Vorrichtung, wie Rollpaletten, Vertikalförderer, Horizontalförderer u. dgl., erforderlich, sondern es genügt das verfahrbare weitere Hebezeug, wobei mit den gleichen Greifern wie des Hebezeuges gearbeitet werden kann, so dass die Container od. dgl. nicht in zusätzlichen Bereichen mit höherer Festigkeit ausgestattet werden müssen. Aus diesem Ort im Zwischenlager kann sodann das Ladegut ebenfalls mit dem weiteren Hebezeug entnommen und sodann auf einen vorbestimmten Platz im Übergabebereich abgestellt werden. Dieser vorbestimmte Platz soll bereits seiner Position am Güterzug entsprechen, da es dann lediglich erforderlich ist, das Ladegut mit dem Hebezeug anzuheben, über das Langstreckentransportmittel zu bewegen und dort abzusenken.

Wird das Ladegut am Hebezeug und oder weiteren Hebezeug um zumindest eine etwa vertikale Achse geschwenkt, so müssen die Langstreckentransportmittel, wie beispielsweise ein Straßenlastkraftwagen und ein Güterzug, wenn eine direkte Beladung erfolgen soll, nicht vollkommen parallel ausgerichtet sein. Auch ist ein derartiger Schwenkvorgang für einen geringen Platzbedarf im Zwischenlager von besonderer Bedeutung.

Wird das Ladegut am Hebezeug und/oder weiteren Hebezeug um zumindest eine etwa horizontale Achse geschwenkt, so kann einerseits eine Parallelausrichtung des Ladegutes zur Plattform des Langstreckentransprotmittels erfolgen und andererseits kann auch ein entsprechender Angleich gegenüber dem Zwischenlager durchgeführt werden.

Wird das Ladegut von einem Langstreckentransportmittel über die Schienen des schienengeleiteten Langstreckentransportmittel zum Übergabebereich bewegt und dort abgesenkt, so liegt eine besonders kurze Transportstrecke vor, da der Übergabebereich zwischen den Schienen des schienengeleiteten Langstreckentransportmittels und dem Zwischenlager liegt, wobei weiters dieser Abladevorgang auch durchgeführt werden kann, wenn ein beladener oder nur teilbeladener Eisenbahnzug vorliegt, da das Ladegut lediglich höher angehoben werden muss.

Wird das weitere Hebezeug etwa entlang, insbesondere parallel, zum Zwischenlager und den Schienen des schienengeleiteten Langstreckentransportmittels bewegt, so kann ein besonders einfaches weiteres Hebezeug zum Einsatz kommen, da keine unterschiedlichen Strecken zum Zwischenlager und dem Übergabebereich für das Lagergut vorliegen, und wobei weiters eine automatengestützte Ablagerung und Entnahme besonders einfach durchgeführt werden kann.

Wird das Ladegut dem Zwischenlager entnommen und dem Übergabebereich entsprechend der erwünschten Anordnung am schienengeleiteten Langstreckentransportmittel vorpositioniert, so kann für die Beladung des Zuges bereits vor Einlangen desselben der Beladezeitraum wesentlich verkürzt werden, da dann lediglich ein Anheben des Ladegutes eine kurze horizontale Dislozierung und sodann Absenken am Langstreckentransportmittel erforderlich ist.

Wird das Ladegut am weiteren Hebezeug mit seinem Schwerpunkt über eine am Boden festgelegte nur eine Schiene bzw. mehreren Bodenschienen mittig derselben bewegt, so kann die Gesamtkonstruktion des Hebezeuges besonders gering gehalten werden, so dass der Energieaufwand für das Zwischenlagern und Vorpositionieren besonders gering gehalten werden kann.

Wird die Bewegung des Ladegutes am weiteren Hebezeug bei benachbarter Stellung des Hebezeuges gehemmt, so ist auf einfache Weise eine Kollision von Ladegut am Hebezeug und Ladegut am weiteren Hebezeug vermieden.

Eine genaue Positionierung des Ladegutes im Zwischenlager kann dann erreicht werden, wenn die Bewegung des weiteren Hebezeuges durch Positionsgeber im Zwischenlager gesteuert wird.

Wird die Bewegung des Hebezeuges und/oder weiteren Hebezeuges über Positionsgeber derselben gesteuert, so kann insbesondere über Bewegung derselben eine einfache laufende Überwachung erfolgen.

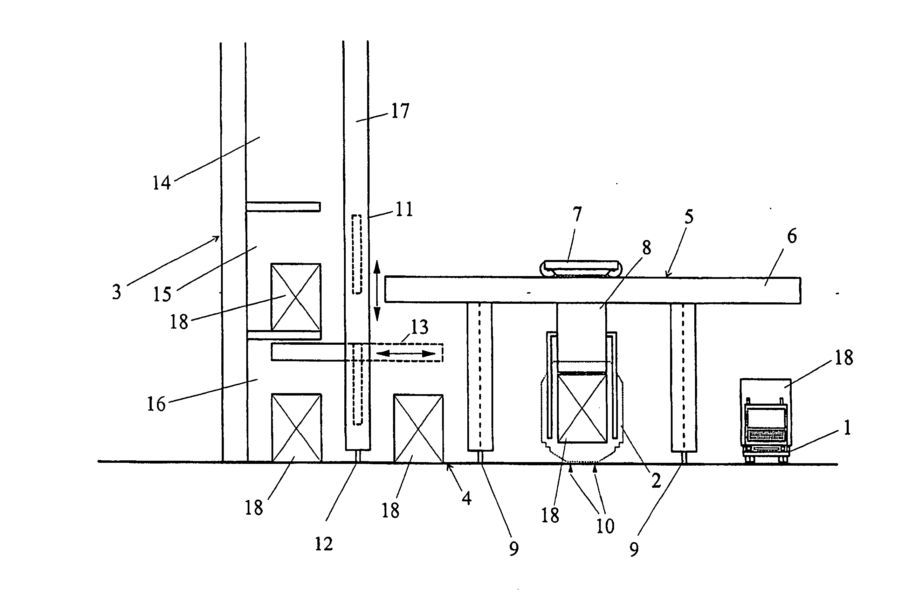

Im folgenden wird die Erfindung anhand der Zeichnung näher erläutert.

Die einzige Fig. zeigt in schematischer Darstellung die einzelnen Stationen des erfindungsgemäßen Verfahrens.

In der Zeichnung sind zwei Langstreckentransportmittel, u. zw. ein Straßenlastkraftwagen 1 sowie ein Eisenbahnzug 2 in etwa parallel zueinander angeordnet dargestellt. Zwischen dem dreistöckigen Hochregallager 3 und dem Eisenbahnzug 2 ist ein Übergabebereich 4 zur Aufnahme des Ladegutes vorgesehen. Über dem Eisenbahnzug 2 ist ein Hebezeug 5, u. zw. ein Portalkran, angeordnet. Auf dessen Querschiene 6 kann sich die Laufkatze 7 mit dem Spreader 8 vom Straßenlastkraftwagen über den Eisenbahnzug bis zum Übergabebereich bewegen. Das Hebezeug 5 kann entlang von Schienen 9, die entlang der Schienen 10 des Eisenbahnzuges verlaufen, bewegt werden. Zwischen dem Hochregallager 3 und dem Übergabebereich 4 ist ein weiteres Hebezeug 11 vorgesehen, das entlang einer Schiene 12 verschiebbar ist. Das Hebezeug 11 weist weiters zwei teleskopierbare Arme 13 auf, auf welchen ein nicht dargestellter Spreader vom Übergabebereich 4 in das Hochregal 3 verfahren werden kann. Der teleskopierbare Arm 13, der auch zusätzlich vertikal entlang von Vertikalträgern 17 verschoben werden kann, ermöglicht den nicht dargestellten Spreader vom Übergabebereich 4 zu dem und in das entsprechende Fach 14, 15, 16 des Hochregales zu bewegen. Das weitere Hebezeug 11 weist zwei hintereinander angeordnete Vertikalträger 17 auf, die einerseits am oberen Ende über einen Querträger verbunden sind, wohingegen die teleskopierbaren Arme 13 an einem nach oben und unten entlang der Vertikalträger beweglichen Querträger befestigt sind. Die Arme können auch durch verschiebbare Arme gebildet sein.

Das Ladegut 18, u. zw. ein Container, ist in verschiedenen Stellungen dargestellt.

Beim Be- und Entladen sowie Zwischenlagern von Ladegut wird nun wie folgt vorgegangen.

Der Container 18, sei es am Straßenlastkraftwagen 1 oder Eisenbahnzug 2, wobei sowohl mehrere Eisenbahnzüge nebeneinander als auch Straßenlastkraftwagen nebeneinander und hintereinander angeordnet sein können, wird entweder über einen Leser am Spreader oder auch händisch identifiziert und in einer Datenverarbeitungsanlage gespeichert. Entweder liegt bereits mit der Identifizierung der Zielort und der Empfänger fest oder es müssen dieselben händisch eingegeben werden. Unter Berücksichtigung des nächsten für den Zielort in Frage kommenden Zuges wird der Container entweder bereits am Eisenbahnzug 2, wenn er vom Straßenlastkraftwagen abgeladen wird oder im Übergabebereich 4 abgestellt. Bei der Entnahme des Containers 18 vom Straßenlastkraftwagen ist es erforderlich, dass das Hebezeug 5 personell überwacht wird. Spreader der Hebezeuge und der weiteren Hebezeuge weisen Sensoren auf, so dass die Haltezapfen in den entsprechenden Aufnahmen leichter eingeführt werden können, jedoch muss berücksichtigt werden, dass der Straßenlastkraftwagen nicht unbedingt parallel zu den Schienen 9 für das Hebezeug angeordnet ist, so dass ein Verdrehen des Spreaders um eine vertikale Achse erforderlich sein kann, und auch wenn der Container ungleichmäßig beladen ist, der Container nicht parallel zum Untergrund angeordnet ist, so dass zusätzlich ein Drehen um eine horizontale Achse erforderlich sein kann. Nach Abheben des Containers wird derselbe sodann in eine Position parallel zu den Schienen 9 und in der Regel waagrecht ausgerichtet verbracht. Soll der Container 18 in das Zwischenlager verbracht werden, so wird das weitere Hebezeug 11 bereits von der Datenverarbeitungsanlage gesteuert, vor den Container bewegt, der Spreader abgesenkt und der Container angehoben. Der Spreader wird nun soweit verfahren, dass der Container mit seinem Schwerpunkt über der Schiene 12 liegt. Es erfolgt nunmehr eine Horizontalförderung an einem von der Datenverarbeitungsanlage vorgegebenen Ort, worauf der Spreader gegebenenfalls hochgefahren wird, wobei an den Vertikalträgern entsprechende Markierungen vorgesehen sind, die mit Sensoren am teleskopierbaren Arm 13 kooperieren. Zur Positionierung des weiteren Hebezeuges 11 vor den einzelnen Fächern sind entsprechende Markierungen bei den Fächern angeordnet, die mit Sensoren, die an den Vertikalträgern bzw. an den teleskopierbaren Armen vorgesehen sind, kooperieren. Der Container wird sodann in das entsprechende Fach eingefahren und abgesenkt.

Zum Beladen eines Eisenbahnzuges wird nun so vorgegangen, dass vom weiteren Hebezeug 11, über die Datenanlage gesteuert, ein vorbestimmter Container 18 aus dem Hochregallager entnommen wird, wobei sowohl der Weg des weiteren Hebezeuges zum einzelnen Fach 14, 15, 16 als auch der Bewegungsablauf für den Container, also Anheben, Bewegen desselben mit seinem Schwerpunkt über die Schiene 12, sodann Absenken und in der gesenkten Stellung verfahren bis zu einem vorgegebenen Ort im Übergabebereich 4 und Absenken des Containers im Übergabebereich von der Datenverarbeitungsanlage gesteuert wird. Die Container 18 werden im Übergabebereich 4 hintereinander nach den Logistikanforderungen gelagert, beispielsweise, wenn einzelne Eisenbahnwaggons abgekoppelt werden sollen oder wenn die spezifischen Anforderungen von Entladeeinrichtungen bei anderen Bahnhöfen zu berücksichtigen sind. Nachdem der Eisenbahnzug eingefahren ist, können über das Hebezeug 5 die Container 18 vom Übergabebereich oder auch vom Straßenlastkraftwagen auf den Eisenbahnzug verfahren werden. Die Bewegung des Ladegutes 18 am weiteren Hebezeug 11 und von demselben wird bei benachbarter Stellung des Hebezeuges gehemmt. Auch besteht die Möglichkeit, wenn mehrere Eisenbahnzüge nebeneinander liegen, ein Verladen von einem Eisenbahnzug auf einen weiteren Eisenbahnzug durchzuführen. Die Anzahl der Hebezeuge und weiteren Hebezeuge als auch die Länge des Übergabebereiches 4 und des Zwischenlagers 3 richten sich nach den beabsichtigten Ladezeiten bzw. der Länge des zu beladenden Langstreckenfahrzeuges.

Zur genauen Steuerung und/oder Regelung der Bewegung des Hebezeuges und/oder weiteren Hebezeuges können dieselben Positionsgeber aufweisen, die z. B. die Lage, bezogen auf das Zwischenlager, den Übergabebereich, den zu beladenden Waggons des Eisenbahnzuges, des Containers, identifizieren und/oder den zurückgelegten Weg erfassen.

## Patentansprüche

1. Verfahren zum Be- und Entladen von Langstreckentransportmitteln (1, 2) sowie Zwischenlagern in einem Zwischenlager (3) von standardisiertem Ladegut (18), z. B. Container, Wechselaufbauten für Straßenlastkraftwagen, wobei das Ladegut (18), insbesondere automatengestützt, identifiziert, mit einem schienengeleiteten Hebezeug (5) mit Greifer (8) von einem Langstreckentransportmittel (1) angehoben und zu einem Übergabebereich (4) verbracht, abgesenkt und abgestellt wird, wonach das Ladegut (18) automatengestützt schienengeleitet zu einem zumindest ein-, insbesondere mehrstöckigen, Zwischenlager (3), z. B. Hochregal, verbracht und dort automatengestützt eingelagert, sodann automatengestützt entnommen, schienengeleitet zu einem prädestinierten Ort des Übergabebereiches (4) automatengestützt verbracht und mit dem schienengeleiteten Hebezeug (5) auf ein schienengeleitetes Langstreckentransportmittel (2) abgesenkt und abgestellt wird, **dadurch gekennzeichnet, dass** das Ladegut (18) im Übergabebereich (4) von einem weiteren schienengeleiteten Hebezeug (11) mit, insbesondere gleichen, Greifern wie des Hebezeuges (5), z. B. Spreadern, Kombispreadern, Zangen, angehoben und von diesem, gegebenenfalls etwa horizontal, zum prädestinierten Ort in das Zwischenlager (3), gegebenenfalls unter Vertikalförderung, über einen verschieb- und/oder teleskopierbaren Arm (13) des weiteren Hebezeuges (11) in das Zwischenlager (3) automatengestützt bewegt und dort abgesenkt und abgestellt wird, worauf zum Beladen des schienengeleiteten Langstreckenfahrzeuges (2) das weitere Hebezeug (11) automatengestützt zu einem prädestinierten Ort des Zwischenlagers (3) verfahren wird und über den verschieb- und/oder teleskopierbaren Arm (13) das Ladegut (18) angehoben und dem Zwischenlager (3) automatengestützt entnommen und automatengestützt zu einem prädestinierten Ort des Übergabebereiches (4) verfahren wird und das Ladegut (18) in diesem abgesenkt und abgestellt wird, worauf das Ladegut (18) vom Hebezeug (5) angehoben über den Langstreckentransportmittel (2) verfahren, abgesenkt und dort abgestellt wird.

2. Verfahren nach Anspruch 1, **dadurch gekennzeichnet, dass** das Ladegut (18) am Hebezeug (5) und/oder weiteren Hebezeug (11) um zumindest eine etwa vertikale Achse geschwenkt wird.

3. Verfahren nach Anspruch 1 oder 2, **dadurch gekennzeichnet, dass** das Ladegut (18) am Hebezeug (5) und/oder weiteren Hebezeug (11) um zumindest eine etwa horizontale Achse geschwenkt wird.

4. Verfahren nach Anspruch 1, 2 oder 3, **dadurch gekennzeichnet, dass** das Ladegut (18) direkt von einem Langstreckentransportmittel (1) über Schienen (10) des schienengeleiteten Langstreckentransportmittels (2) zum Übergabebereich (4) bewegt und dort abgesenkt wird.

5. Verfahren nach einem der Ansprüche 1. bis 4, **dadurch gekennzeichnet, dass** das weitere Hebezeug (11) etwa entlang, insbesondere parallel, zum Zwischenlager (3) und den Schienen (10) des schienengeleiteten Langstreckentransportmittels (2) bewegt wird.

6. Verfahren nach einem der Ansprüche 1 bis 5, **dadurch gekennzeichnet, dass** das Ladegut (18) dem Zwischenlager (3) entnommen und im Übergabebereich (4), entsprechend der erwünschten Anordnung am schienengeleiteten Langstreckentransportmittel (2), vorpositioniert wird.

7. Verfahren nach einem der Ansprüche 1 bis 6, **dadurch gekennzeichnet, dass** das Ladegut (18) am weiteren Hebezeug (11) mit seinem Schwerpunkt über eine am Boden festgelegte nur eine Schiene (12) bzw. bei mehreren Bodenschienen mittig derselben bewegt wird.

8. Verfahren nach einem der Ansprüche 1 bis 7, **dadurch gekennzeichnet, dass** die Bewegung des Ladegutes (18) am weiteren Hebezeug (11) und von demselben gehemmt wird bei benachbarter Stellung des Hebezeuges (5).

9. Verfahren nach einem der Ansprüche 1 bis 8, **dadurch gekennzeichnet, dass** die Bewegung des weiteren Hebezeuges (11) durch Positionsgeber vor und/oder im Zwischenlager (3) gesteuert wird.

10. Verfahren nach einem der Ansprüche 1 bis 9, **dadurch gekennzeichnet, dass** über Positionsgeber am Hebezeug und/oder weiteren Hebezeug die Bewegung derselben gesteuert wird.

## Claims

1. Method for loading and unloading long-distance means of transport (1, 2) and for temporarily storing standardised loads (18) in a temporary store (3), for example containers, interchangeable bodies for road lorries, the load (18), being lifted, in particular automatically supported and identified, with a rail-guided lifting appliance (5) with a gripper (8) from a long-distance means of transport (1) and brought to a transfer region (4) and lowered and deposited, whereupon the load (18) is brought, automatically supported and rail-guided, to an at least one-storey, in particular multistorey, temporary store (3), for example high rack, and is placed in storage there, automatically supported, then removed, automatically supported, and brought automatically supported and rail-guided to a predetermined site of the transfer region (4) and is lowered and deposited with the rail-guided lifting appliance (5) onto a rail-guided long distance means of transport (2), **characterised in that** the load (18) is lifted in the transfer region (4) by a further rail-guided lifting appliance (11) with, in particular identical, grippers to the lifting appliance (5), for example spreaders, combined spreaders, tongs and moved thereby, automatically supported, optionally approximately horizontally, to the predetermined site into the temporary store (3), optionally with vertical conveyance, via a displaceable and/or telescopic arm (13) of the further lifting appliance (11) into the temporary store (3) and is lowered and deposited there, whereupon, to load the rail-guided long-distance vehicle (2), the further lifting appliance (11) is moved, automatically supported, to a predetermined site of the temporary store (3) and the load (18) lifted via the displaceable and/or telescopic arm (13) and, automatically supported, removed from the temporary store (3) and moved, automatically supported to a predetermined site of the transfer region (4) and the load (18) is lowered and deposited therein, whereupon the load (18), lifted by the lifting appliance (5), is moved over the long-distance means of transport (2), lowered and deposited there.

2. Method according to claim 1, **characterised in that** the load (18) on the lifting appliance (5) and/or further lifting appliance (11) is pivoted at least about an approximately vertical axis.

3. Method according to claim 1 or 2, **characterised in that** the load (18) on the lifting appliance (5) and/or further lifting appliance (11) is pivoted at least about an approximately horizontal axis.

4. Method according to claim, 1, 2, or 3 **characterised in that** the load (18) is moved directly from a long-distance means of transport (1) via rails (10) of the rail-guided long distance means of transport (2) to the transfer region (4) and is lowered there.

5. Method according to any one of claims 1 to 4, **characterised in that** the further lifting appliance (11) is moved approximately along, in particular parallel, to the temporary store (3) and the rails (10) of the rail-guided long-distance means of transport (2).

6. Method according to any one of claims 1 to 5, **characterised in that** the load (18) is removed from the temporary store (3) and pre-positioned in the transfer region (4), according to the desired arrangement on the rail-guided long distance means of transport (2).

7. Method according to any one of claims 1 to 6, **characterised in that** the load (18) on the further lifting appliance (11) is moved with its centre of gravity over only one rail (12) fixed to the base, or in the case of a plurality of base rails, in the centre thereof.

8. Method according to any one of claims 1 to 7, **characterised in that** the movement of the load (18) is impeded on and by the further lifting appliance (11), in the event of an adjacent position of the lifting appliance (5).

9. Method according to any one of claims 1 to 8, **characterised in that** the movement of the further lifting appliance (11) is controlled by position sensors prior to and/or in the temporary store (3).

10. Method according to any one of claims 1 to 9, **characterised in that**, via position sensors on the lifting appliance and/or further lifting appliance, the movement thereof is controlled.

## Revendications

1. Procédé pour charger et décharger des moyens de transport à grande distance (1, 2) ainsi que pour effectuer l'entreposage dans un magasin intermédiaire (3) d'objets à charger (18) standardisés, par exemple de conteneurs ou de carrosseries interchangeables de camions de transports routiers, les objets à charger (18) étant identifiés, en particulier avec l'assistance d'un automate, soulevés d'un moyen de transport à grande distance (1) à l'aide d'un appareil de levage (5) sur rails, muni de moyens de préhension (8), et amenés dans une zone de transfert (4) où ils sont abaissés et déposés, à la suite de quoi les objets à charger (18) sont acheminés, avec l'assistance d'un automate, sur des rails, à un magasin intermédiaire (3) comportant au moins un étage, de préférence plusieurs étages, par exemple un rayonnage de grande hauteur, où ils sont déposés avec l'assistance d'un automate, puis retirés avec l'assistance d'un automate, acheminés, avec l'assistance d'un automate, sur des rails, à un endroit prédestiné de la zone de transfert (4) et abaissés et déposés par l'appareil de levage (5) sur rails sur un moyen de transport à grande distance (2) sur rails, **caractérisé par le fait que** dans la zone de transfert (4), les objets à charger (18) sont soulevés par un autre appareil de levage (11) sur rails, comportant des moyens de préhension, notamment identiques à ceux de l'appareil de levage (5), par exemple des agrippeurs, des agrippeurs combinés ou des pinces, et sont déplacés par cet appareil, le cas échéant de façon sensiblement horizontale, jusqu'à l'endroit prédestiné dans le magasin intermédiaire (3), sont déplacés, le cas échéant avec transport vertical, par l'intermédiaire d'un bras (13) coulissant et/ou télescopique de l'appareil de levage (11) supplémentaire, avec l'assistance d'un automate, dans le magasin intermédiaire (3) où ils sont abaissés et déposés, à la suite de quoi, pour charger le véhicule de transport à grande distance (2) sur rails, l'appareil de levage (11) supplémentaire est amené avec l'assistance d'un automate à un endroit prédestiné du magasin intermédiaire (3), et les objets à charger (18) sont soulevés par l'intermédiaire du bras (13) coulissant et/ou télescopique et retirés du magasin intermédiaire (3) avec l'assistance d'un automate et sont acheminés, avec l'assistance d'un automate, à un endroit prédestiné de la zone de transfert (4) où ils sont abaissés et déposés, à la suite de quoi les objets à charger (18) sont soulevés par l'appareil de levage (5), amenés au-dessus du moyen de transport à grande distance (2), abaissés et déposés sur ce moyen de transport.

2. Procédé selon la revendication 1, **caractérisé par le fait que** les objets à charger (18) sont pivotés autour d'au moins un axe sensiblement vertical sur l'appareil de levage (5) et/ou l'appareil de levage (11) supplémentaire.

3. Procédé selon la revendication 1 ou 2, **caractérisé par le fait que** les objets à charger (18) sont pivotés autour d'au moins un axe sensiblement horizontal sur l'appareil de levage (5) et/ou l'appareil de levage (11) supplémentaire

4. Procédé selon la revendication 1, 2 ou 3, **caractérisé par le fait que** les objets à charger (18) sont déplacés directement à partir d'un moyen de transport à grande distance (1), via des rails (10) du moyen de transport à grande distance (2) sur rails, jusqu'à la zone de transfert (4) et y sont abaissés.

5. Procédé selon une des revendications 1 à 4, **caractérisé par le fait que** l'appareil de levage (11) supplémentaire est déplacé sensiblement le long du magasin intermédiaire (3), en particulier parallèlement à celui-ci et aux rails (10) du moyen de transport à grande distance (2) sur rails.

6. Procédé selon une des revendications 1 à 5, **caractérisé par le fait que** les objets à charger (18) sont retirés du magasin intermédiaire (3) et sont prépositionnés dans la zone de transfert (4), en fonction de la disposition souhaitée sur le moyen de transport à grande distance (2) sur rails.

7. Procédé selon une des revendications 1 à 6, **caractérisé par le fait que** les objets à charger (18), lorsqu'ils se trouvent sur l'appareil de levage (11) supplémentaire, sont déplacés avec leur centre de gravité au-dessus d'un rail (12) unique, fixé au sol, ou, lorsqu'il y a plusieurs rails au sol, sont déplacés au milieu de ceux-ci.

8. Procédé selon une des revendications 1 à 7, **caractérisé par le fait que** le mouvement des objets à charger (18) sur l'appareil de levage (11) supplémentaire est ralenti par cet appareil de levage, lorsque l'appareil de levage (5) se trouve à proximité.

9. Procédé selon une des revendications 1 à 8, **caractérisé par le fait que** le mouvement de l'appareil de levage (11) supplémentaire est commandé par des détecteurs de position, devant et/ou dans le magasin intermédiaire (3).

10. Procédé selon une des revendications 1 à 9, **caractérisé par le fait que** le mouvement de l'appareil de levage et/ou de l'appareil de levage supplémentaire est commandé par des détecteurs de position de ces appareils.
